# EUROPEAN PATENT APPLICATION

(11) **EP 4 494 963 A1**
(43) Date of publication of application: **22.01.2025**
(21) Application number: 23315284.2
(22) Date of filing: 19.07.2023
(51) Int. Cl.: B60W 40/02, B60W 40/10, B60W 40/12, B60C 11/24, B60H 1/00, G07C 5/00, G08G 1/00

(54) **DEVICE AND METHOD FOR PROVIDING INFORMATION INDICATIVE OF A LEVEL OF POLLUTION GENERATED BY VEHICLE TIRE ABRASION**

(71) Applicant: MANN+HUMMEL Ventures Pte. Ltd., Singapore 139234 (SG)
(72) Inventor: Zenner, Julien, 71636 Ludwigsburg (DE); Michel, Christiane, 71636 Ludwigsburg (DE); Grotz, Maximilian, 71636 Ludwigsburg (DE); Woitoll, Ina, 71636 Ludwigsburg (DE); Schoch, Marcel, 71636 Ludwigsburg (DE)
(74) Representative: Mann + Hummel Intellectual Property

(57) **Abstract**

Aspects concern a method for providing information indicative of a level of pollution generated by vehicle tire abrasion to a vehicle, the method comprising: acquiring, for each of at least some geographical locations of a plurality of geographical locations, information indicative of vehicle tire abrasion at the geographical location, the vehicle abrasion derived from vehicle sensor data from one or more vehicles, determining, for each of the plurality of geographical locations, pollution data including an information indicative of a level of pollution generated by vehicle tire abrasion at the geographical location derived from the acquired information indicative of vehicle tire abrasion and providing, in response to a request by a vehicle for information indicative of the level of pollution generated by the vehicle by tire abrasion for a geographical location at which the vehicle is located, the information indicative of the level of pollution generated by vehicle tire abrasion determined for the geographical location at which the vehicle is located.

## Description

### TECHNICAL FIELD

Various aspects of this disclosure relate to devices and methods for providing information indicative of a level of pollution generated by vehicle tire abrasion to a vehicle.

### BACKGROUND

For a vehicle, it may be desirable to have information on air pollution, e.g. for controlling a cabin air system. While air quality stations exist that may provide such kind of information, those may not cover every location, at least not for all types of pollution. For example, a certain (local) measurement station may only provide information about a current (local) pollution status regarding defined parameters (such as PM10) which may in particular exclude, for example, smaller particles caused by vehicle tire abrasion.

Accordingly, efficient and accurate approaches for providing information indicative of a level of pollution generated by vehicle tire abrasion to a vehicle are desirable.

### SUMMARY

Various embodiments concern a method for providing information indicative of a level of pollution generated by vehicle tire abrasion to a vehicle, the method comprising: acquiring, for each of at least some geographical locations of a plurality of geographical locations, information indicative of vehicle tire abrasion at the geographical location, the vehicle abrasion derived from vehicle sensor data from one or more vehicles, determining (and e.g. storing), for each of the plurality of geographical locations, pollution data including an information indicative of (e.g. about or based on) a level of pollution generated by vehicle tire abrasion at the geographical location derived from the acquired information indicative of vehicle tire abrasion and providing, in response to a request by a vehicle (i.e. a requestor or requesting vehicle, e.g. a requestor or requesting component of the vehicle) for information indicative of the level of pollution generated by the vehicle by tire abrasion for a geographical location at which the vehicle is located, the information indicative of the level of pollution generated by vehicle tire abrasion determined (e.g. calculated and/or stored) for the geographical location at which the vehicle is located.

According to one embodiment, the method further comprises receiving (e.g. at a database system performing the method), from each vehicle of the one or more vehicles a transmission of an information indicative of vehicle tire abrasion at the geographical location at which the respective vehicle of the one or more vehicles is located.

According to one embodiment, the transmission comprises an indication of the geographical location at which the respective vehicle of the one or more vehicles is located.

According to one embodiment, the pollution data is stored in a database external to the one or more vehicles (and/or external to the vehicle).

According to one embodiment, the method further comprises receiving the request and providing the information indicative of the level of pollution generated by vehicle tire abrasion via radio communication.

According to one embodiment, the method further comprises acquiring the information indicative of vehicle tire abrasion for a plurality of weather conditions and determining the pollution data including the information indicative of the level of pollution generated by vehicle tire abrasion per weather condition of the plurality of weather conditions.

According to one embodiment, the request indicates at least one of the plurality of weather conditions and the method comprises providing the information about the level of pollution generated by the vehicle by tire abrasion at the geographical location at which the vehicle is located determined for the indicated weather condition.

According to one embodiment, the geographical location at which the vehicle is located is a road or a road segment.

According to one embodiment, the information indicative of the level of pollution generated by vehicle tire abrasion comprises an information indicative of a condition of the road or the road segment.

According to one embodiment, the information indicative of the level of pollution generated by vehicle tire abrasion comprises an estimate of a friction coefficient between a vehicle's tire and the road or the road segment.

According to one embodiment, a database system is provided, the database system comprising at least one processor configured to acquire, for each of at least some geographical locations of a plurality of geographical locations, information indicative of vehicle tire abrasion at the geographical location, the vehicle abrasion derived from vehicle sensor data from one or more vehicles, determine (and e.g. store), for each of the plurality of geographical locations, pollution data including an information indicative of (e.g. about or based on) a level of pollution generated by vehicle tire abrasion at the geographical location derived from the acquired information indicative of vehicle tire abrasion and provide, in response to a request by a vehicle (i.e. a requestor or requesting vehicle, e.g. a requestor or requesting component of the vehicle) for information indicative of the level of pollution generated by the vehicle by tire abrasion for a geographical location at which the vehicle is located, the information indicative of the level of pollution generated by vehicle tire abrasion determined (e.g. calculated and/or stored) for the geographical location at which the vehicle is located.

According to one embodiment, a method for controlling a pollution control system of a vehicle is provided, the method comprising acquiring information indicative of a level of pollution generated by the vehicle by tire abrasion, determining a value of an operational parameter of a pollution control system of the vehicle depending on the acquired information and controlling the pollution control system of the vehicle according to the determined value of the operational parameter.

According to one embodiment, the method comprises acquiring the information indicative of the level of pollution generated by the vehicle by tire abrasion from a database external to the vehicle.

According to one embodiment, the method comprises acquiring the information indicative of the level of pollution generated by the vehicle by tire abrasion from the database via radio communication.

According to one embodiment, the method comprises acquiring the information indicative of the level of pollution generated by the vehicle by tire abrasion from the database by sending a request from the vehicle to the database indicating a location of the vehicle, a weather condition the vehicle is in, or both.

According to one embodiment, the information indicative of the level of pollution generated by the vehicle by tire abrasion comprises an information indicative of a condition of a road on which the vehicle is located.

According to one embodiment, the information indicative of the level of pollution generated by the vehicle by tire abrasion comprises an estimate of a friction coefficient between a vehicle's tires and the road on which the vehicle is located.

According to one embodiment, the information indicative of the level of pollution generated by the vehicle by tire abrasion is at least partially derived from sensor data provided by a sensor of the vehicle.

According to one embodiment, the pollution control system of the vehicle is a cabin air system.

According to one embodiment, the method comprises estimating a concentration of pollutant particles caused by tire abrasion of the vehicle from the acquired information and determining the operational parameter of the cabin air system to reduce the concentration of pollutant particles caused by tire abrasion of the vehicle in a cabin of the vehicle if an estimated concentration of pollutant particles caused by tire abrasion of the vehicle is above a predetermined threshold.

According to one embodiment, the pollution control system of the vehicle is a navigation system of the vehicle taking into account air pollution. For example, the pollution control may include selecting a suitable route by optimizing time, distance, energy, and/or level of pollution encountered during the trip. More than one of these parameters could be optimized as a combination with different weights for each parameters, e.g., as selected by the user.

According to one embodiment, a vehicle controller is provided, the vehicle controller comprising at least one processor configured to acquire information indicative of a level of pollution generated by a vehicle by tire abrasion, determine a value of an operational parameter of a pollution control system of the vehicle depending on the acquired information and control the pollution control system of the vehicle according to a determined operational parameter.

According to one embodiment, a computer program element is provided comprising program instructions, which, when executed by one or more processors, cause the one or more processors to perform the method of any one of the embodiments described above.

According to one embodiment, a computer-readable medium is provided comprising program instructions, which, when executed by one or more processors, cause the one or more processors to perform the method of any one of the embodiments described above.

It should be noted that embodiments described in context of one of the methods are analogously valid for the devices (i.e. database system and vehicle controller) and vice versa.

### BRIEF DESCRIPTION OF THE DRAWINGS

The disclosure will be better understood with reference to the detailed description when considered in conjunction with the non-limiting examples and the accompanying drawings, in which:
- FIG. 1 shows a vehicle with a cabin air system;
- FIG. 2 illustrates the generation and augmentation of a pollution map (also referred to as hypermap) from raw data;
- FIG. 3 shows a flow diagram illustrating generation of a hypermap including information about road properties using wear and friction coefficients and/or road specific friction coefficients;
- FIG. 4 shows a flow diagram illustrating the use of a hypermap for determining pollution from tire wear without need for direct measurement of tire wear according to an embodiment;
- FIG. 5 shows a flow diagram illustrating the use of a hypermap for determining pollution from tire wear without need for direct measurement of tire wear according to another embodiment;
- FIG. 6 shows a flow diagram illustrating an example where the hypermap includes a friction coefficient;
- FIG. 7a and FIG. 7b illustrate the placement of car sensors that may be used to acquire pollution data on a vehicle;
- FIG. 8 illustrates the usage of a laser sensor for determining road surface information.
- FIG. 9 illustrates the usage of an acoustic sensor for determining road surface information;
- FIG. 10 illustrates the usage of a camera sensor for determining road surface information;
- FIG. 11 illustrates the generation of a hypermap using sensor data of multiple vehicles;
- FIG. 12 shows illustrates the structure of a hypermap in terms of the geographical locations;
- FIG. 13 shows a flow diagram illustrating a method for providing information indicative of a level of pollution generated by vehicle tire abrasion to a vehicle; and
- FIG. 14 shows a flow diagram illustrating a method for controlling a pollution control system of a vehicle.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of the devices or methods are analogously valid for the other devices or methods. Similarly, embodiments described in the context of a device are analogously valid for a vehicle or a method, and vice-versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

As used herein, the term "vehicle" includes a motor-powered vehicle, for example a vehicle having 2, 3, 4, or more wheels. Examples of the vehicle include a passenger car, a truck, a bus, a lorry, or a rail vehicle, for example, a locomotive. In some embodiments, the vehicle may be an electric vehicle or a hybrid (internal combustion engine and electrical) vehicle. In some embodiments, the vehicle may be an internal combustion engine (ICE) vehicle (i.e., non-hybrid). The term vehicle may further include autonomous vehicles.

As used herein, the term "processor(s)", as used herein, includes one or more electrical circuits capable of processing data, i.e. processing circuits. A processor may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, or a firmware.

As used herein, the term "module" refers to, or forms part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

As used herein, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take some forms and represent any information as understood in the art.

As used herein, the term "obtain", as used herein, refers to the processor which actively obtains the inputs, or passively receives inputs from one or more sensors or data source. The term obtain may also refer to a processor, which receives or obtains inputs from a communication interface, e.g. a user interface. The processor may also receive or obtain the inputs via a memory, a register, and/or an analog-to-digital port.

In the following, embodiments will be described in detail.

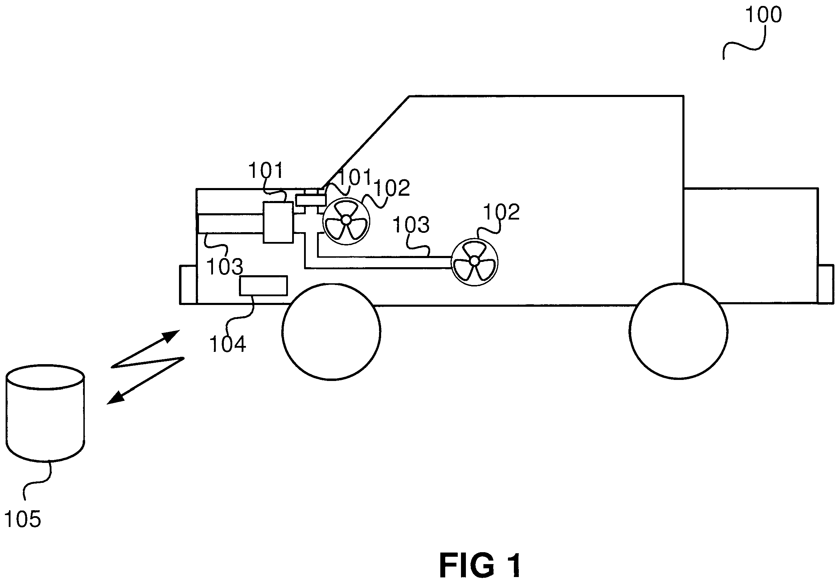

FIG. 1 shows a vehicle 100 with a cabin air system.

The cabin air system comprises one or more of filters 101, fans 102 and ducts 103 that work together to provide and circulate air throughout the vehicle's cabin. In some embodiments, the one or more filters 101, fans 102, and ducts 103 may be arranged in a series. The cabin air system is designed to remove pollutants, dust, and other harmful particles from the air while also regulating temperature and humidity levels. In particular, the cabin air system operates as cabin air filtration system (and may be regarded as such). Similarly, the cabin air system may operate and be regarded as an in-vehicle ambient air filtration system (ambient air in the sense of air external to the vehicle).

The cabin air system comprises a controller 104 which controls its operation by various control actions, e.g. sets fan speeds and the degree to which air vents and air ducts are opened. The controller 104 may for example measure interior air quality and perform corresponding control actions. The controller 104 may form at least part of the vehicle controller.

According to various embodiments, a more optimized cabin air (filtration) system is provided in that it takes into consideration not only the cabin air quality, but also the external air quality and the state of its filters 101 with the aim to provide improved cabin air quality at a lower energy expense while optimizing filter usage, e.g., by extending RUL (rest of useful life).

To estimate the external air quality, the controller 104 uses a pollution map wherein at least part of the data for the pollution map is provided from vehicle's onboard data which comprises tire-generated pollution data (or tire use data indicating tire-generated pollution). For example, tire use data may include wear, usage, friction coefficient, or a combination thereof. In some embodiments, the wear or the friction coefficient may be estimated (e.g. by the controller 104 using additional data, such as weather, traffic, pavement properties). Based on the tire use data, the controller 104, for example, may calculate tire generated pollution data and estimate external air quality from these pollution data. For example, the estimation of pollution generated by the vehicle 100 (in particular tire generated pollution but possibly total pollution further including other pollution depending on external conditions like a traffic jam etc.) can be used to anticipate the necessity for activation of operations of the cabin air system (such as a filtering operation) to improve air quality. Thus, instead of waiting for sensor feedback (e.g. indicating bad interior air quality), the operations of the cabin air system can be activated in advance.

It should be noted that in addition, the calculated tire generated pollution data may be used, for example by a further controller of the vehicle 100, i.e. the polluting vehicle, or by the same controller 104, for determining total pollution emissions of the vehicle (e.g., absolute or net) and possibly control them to reduce net emissions (and e.g. for fault detection and exclusion).

Air Quality data is typically available from public measurement stations (in particular measurements like PM10 and PM2.5 and also NO₂ measurements etc.). So, a controller of a cabin air system can use this information. However, apart from the available information on air quality from measurement stations, there are other factors that may cause increased air pollution. There may be pollution that cannot be recognized by these measurement stations since, for example, a certain (local) measurement station only provides information about the current (local) pollution status regarding to defined parameters (such as PM10), i.e. when using only information about such a measurement station, there is a blind spot regarding, for example, particles smaller than PM2.5 and bigger than PM10.

According to various embodiments, this blind spot, in particular in the context of controlling a cabin air system as described above, is covered by using data collected by car sensors (such as friction coefficient, car movement, traffic, altitude differences, etc., in particular to estimate tire generated pollution) in order to provide more precise data on pollution as well as allow predictions of high pollution levels. Apart from PM10 and PM2.5 particularly predictions on Ultrafine particles (LTFP, particles smaller than 0.1 micrometers) are possible, because high friction and high traffic are known to contribute essentially to UFP concentration. So, according to various embodiments, data for estimating pollution is collected from vehicles on the road, and/or public databases.

It should be noted that the cars may be equipped with one or more sensors and the collected sensor data can give information on expected pollution risks. The one or more sensors may include at least one hardware sensor, at least one software sensor, or a combination of the at least one hardware and software sensors. In some embodiments, the one or more sensors may further include onboard sensors, remote sensors, and/or remote sensors. So, apart from PM10 and PM2.5 levels, also risks of increased Ultrafine Particle concentrations can be evaluated using car sensors. For example, a friction sensor (which may be provided in a vehicle to warn about a slippery road) may provide a friction coefficient which gives indication on the level of road and tire abrasion. From an air quality point of view, high friction means also expected increase in UFP concentration and pollution level. So, the controller 104, for example, may use this friction information to estimate tire generated pollution. Similarly, data from other vehicle sensors that is collected and used to provide services like warnings about traffic jams, accidents, slippery roads etc. may be used in addition for deriving air quality information and prediction pollution to, for example, intelligently activate a cabin air filtration system. Using the data of these sensors allows increasing the accuracy of information on air quality and closing the above-mentioned blind spot of measurement stations, i.e. considering influencing factors for air pollution that are neglected when only data from UFP measurement stations (for certain particle sizes) is used.

It is contemplated that combining measured Air Quality (AQ) data with data provided by car sensors can give more precise information and allow a prediction of expected risks of high pollution, especially regarding UFPs. An estimated pollution level, besides being used for controlling a cabin air system of a vehicle (e.g. to activate especially designed filters (e.g. a HEPA (High-Efficiency Particulate Air) filter), may also be displayed to a user (e.g. driver, e.g. in a digitally visualized tool like a dashboard or mobile app) to provide different AQ information or recommendations to the user such as alternative routes or to exchange the cabin filter.

Data related to pollution data acquired by air quality measurement stations and vehicles sensors as described above may be gathered in a database 105 (accessible by a database server), to which the controller 104 may for example connect. This database 105 may store pollution data for multiple locations, i.e. stores pollution data per each of multiple geographical locations (e.g. areas of a certain size, street segments, city areas etc.), in a data structure (i.e. pollution map) which is referred to as hypermap in the following.

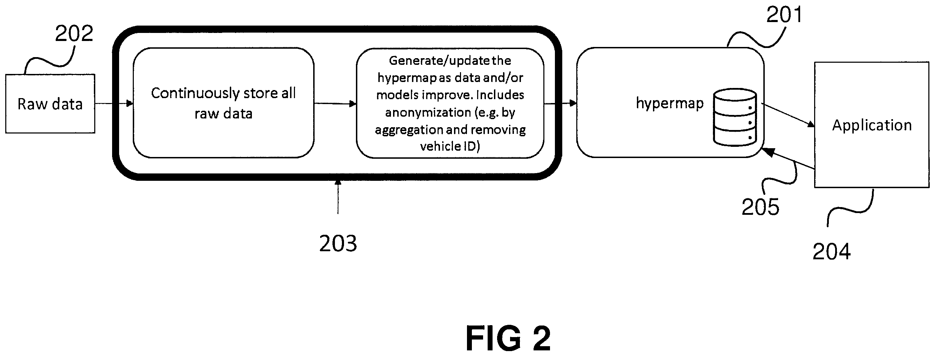

FIG. 2 illustrates the generation and augmentation of a hypermap 201 from raw data 202, e.g. performed by the database (e.g. a corresponding database server) 105.

The input data, i.e. the raw data 202, may be measured data obtained via a vehicle sensor or measurement station, or may be calculated or derived data. In some embodiments, the calculated data may include an estimation of tire wear based on driving data, weather, tire properties, etc.

Examples of measured data include
- data from an optical measurement of tire groove depth, e.g. using stereo vision or laser: can measure the wear, e.g., radius reduction per time.
- data measured by a radio communication, for example a radio frequency (RF) method: similar data output as above
- slip ratio (based on difference between GPS vehicle speed and tire speed): easy to obtain.
- Skiddometer data: allows measuring the friction coefficient (typically used at airports).

The raw data 202 may be continuously acquired and stored and used for generating and (continuously) updating the hypermap 201. When raw data 202 is acquired from a vehicle, it may be anonymized, i.e., personal data protection may be provided by a data protection module 203. Information from the hypermap 201 may be requested from, e.g., the database 105, e.g. by the controller 104 to retrieve data for determining pollution in a geographic area where the vehicle 100 is located.

The raw data 202 may be stored and/or processed at various stages according to various embodiments. For example, tire wear data may be processed into pollution data to be stored in the hypermap 201, or the tire wear data may be stored in the hypermap 201 and processing may occur when the pollution data is needed (e.g. on the side of the controller 104). In some embodiments, the hypermap data 201 may be accessed by one or more external applications via sending of one or more requests 205 by the application(s) 204. Such requests 205 may be authenticated. It is appreciable that the raw data 202 may not be accessed.

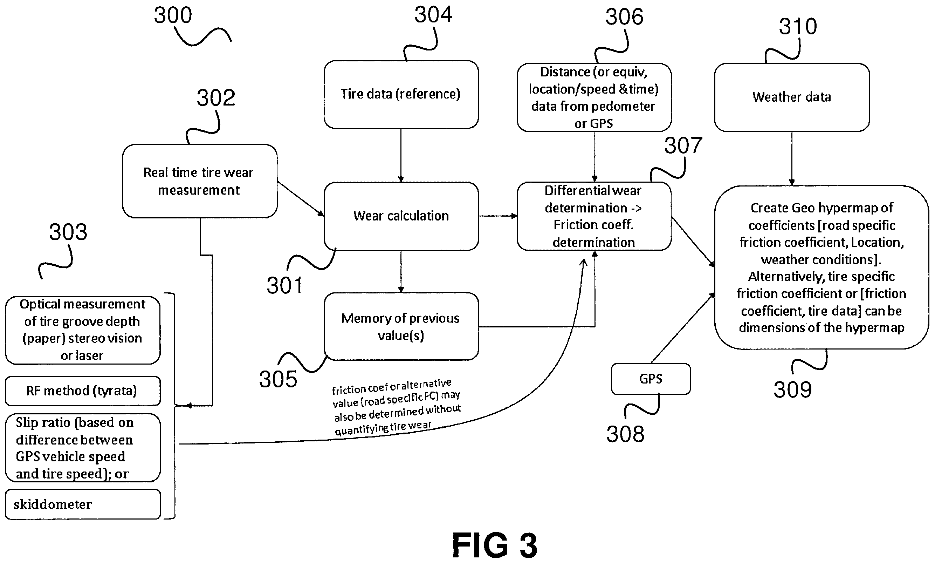

FIG. 3 shows a flow diagram 300 illustrating generation of a hypermap (e.g. hypermap 201) including information about road properties using wear and friction coefficients and/or road specific friction coefficients, e.g. performed by the database (e.g. a corresponding database server) 105.

In 301, tire wear is calculated using raw data from tire wear measurements 302 provided by data sources 303 like the ones mentioned above. The tire wear calculation may use tire (reference) data and previous values from a memory of previous results (in which current results are also stored for later use). Wear calculation may be temperature corrected (optionally) because groove depth may change with temperature of the tire itself. By taking into account travelled distance 306 and comparing tire wear before and after, a friction coefficient may be determined in 307. Depending on the data sources 303 provide, the friction coefficient may alternatively be determined without quantifying tire wear.

Using location information 308, e.g. from a global positioning system (GPS), an entry containing the determined friction coefficient for a respective location may be generated for the hypermap in 309. As illustrated in figure 3, the hypermap may contain friction coefficients for each of a plurality of different weather conditions (e.g. "rain", "dry weather", "snow" or also temperature ranges like below 0 °C, 0 °C -15 °C, 15 °C to 25 °C, above 25 °C ...). Accordingly, weather data 310 may be taken into account when generating an entry for the hypermap. In an alternative embodiment of 309, the friction coefficients can be dimensions of the hypermap.

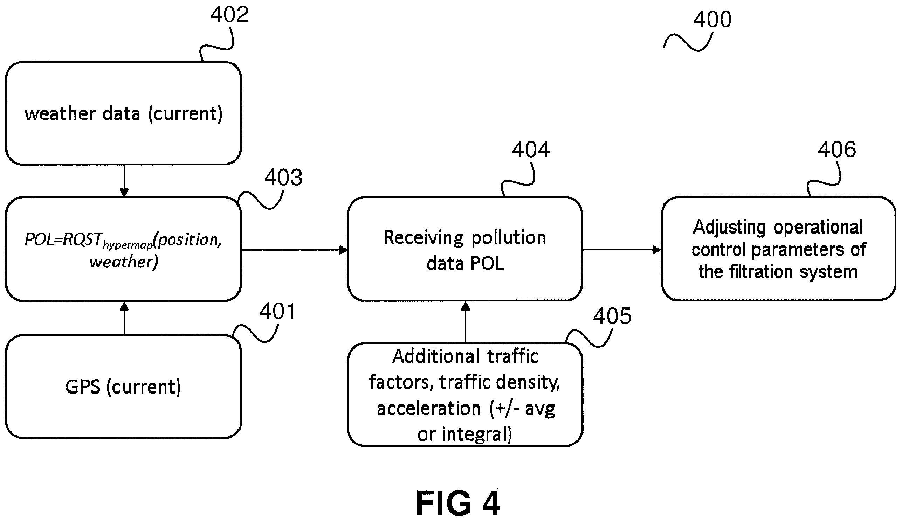

FIG. 4 shows a flow diagram 400 illustrating the use of a hypermap (e.g. hosted by database 105) for determining pollution from tire wear without need for direct measurement of tire wear according to an embodiment.

The controller 104, for example, obtains the location 401 of the vehicle 100 from GPS and the determines the current weather condition 402 in which the vehicle 100 is, for example from rain sensor data and/or a weather map etc. In 403, the vehicle 100 then requests the entry of the hypermap for/based on the determined current weather condition 402 and the determined vehicle location 401 from the database 105. The requested entry may be a calculation of the pollution data based on the current weather condition 402 and the determined vehicle location 401.

In 404, the database 105 provides the requested entry, i.e. the pollution data that is stored for the current weather condition 402 and the vehicle location 401, and the controller 104 receives this pollution data.

The controller 104 may receive additional pollution data 405, for example information about traffic, and speed/velocity or derivatives such as acceleration of the vehicle 100.

In 406, the controller 104 controls the cabin air system of the vehicle 100 based on the received pollution data (i.e. the pollution data contained in the (respective entry of the) hypermap and possibly the additional pollution data 405). This means that depending on the received pollution data, the controller 104 adjusts operational parameters of the cabin air system, e.g. filtration parameters.

In some embodiments, the additional pollution data 405 may be based on one or more factors such as traffic factors, traffic density, acceleration and/or statistical measurements of the aforementioned.

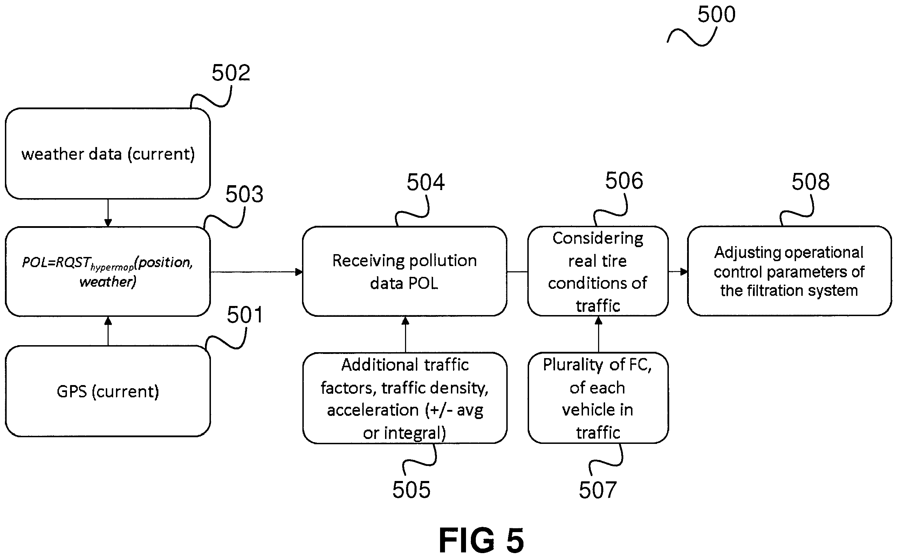

FIG. 5 shows a flow diagram 500 illustrating the use of a hypermap (e.g. hosted by database 105) for determining pollution from tire wear without need for direct measurement of tire wear according to another embodiment.

Similarly to FIG. 4, the controller 104, for example, obtains the location 501 of the vehicle 100 from GPS and then determines the current weather condition 502 in which the vehicle 100 is. In 503, the vehicle 100 then requests the entry of the hypermap for the determined current weather condition 502 and the determined vehicle location 501 from the database 105.

In 504, the database 505 provides the requested entry, i.e. the pollution data that is stored for the current weather condition 502 and the vehicle location 501, and the controller 104 receives this pollution data. The requested entry may be a calculation of the pollution data based on the current weather condition 502 and the determined vehicle location 501.

As in the example of FIG. 4, the controller 104 may receive additional pollution data 505, for example information about traffic, and speed/velocity information or derivatives such as acceleration of the vehicle 100.

In 506, the controller 104 may further obtain or receive friction coefficients 507 of one or more other vehicles in its vicinity, e.g. via vehicle-to-vehicle communication and may consider this information about tire conditions of other vehicles (in addition to the received pollution information) when determining adjustments for operational parameters of the cabin air system, e.g. filtration parameters.

In 508, the controller 104 adjusts the operation of the cabin air system according to the determined adjustments.

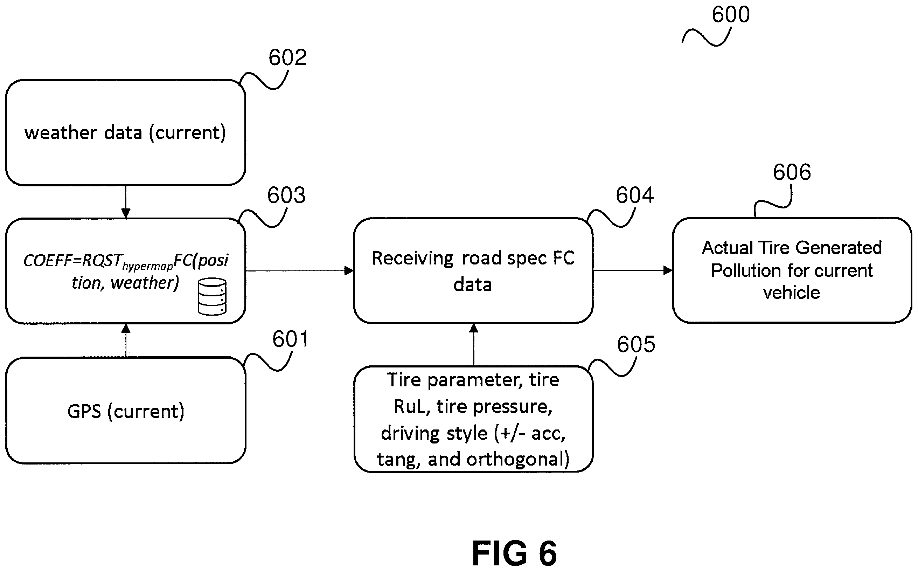

FIG. 6 shows a flow diagram 600 illustrating an example where the hypermap includes a friction coefficient.

The controller 104, for example, obtains the location of the vehicle 601 from GPS and then determines the current weather condition 602 in which the vehicle 100 is (e.g. from rain sensor data and/or a weather map etc.).

In 603, it then requests the entry of the hypermap for the determined current weather condition 602 and the determined vehicle location 601 from the database 105. In this example, the hypermap entry includes the friction component (as pollution data).

In 604, the database 105 provides the requested entry, i.e. the friction coefficient that is stored for the current weather condition 602 and the vehicle location 601 (e.g. a certain road) in the hypermap, and the controller 104 receives the friction coefficient.

The controller 104 may receive additional pollution data 605, for example information about its tires and a driving style of its driver (based on speed/velocity and acceleration data, for example).

In 606, the controller 104 determines the actual tire generated pollution of the vehicle 100 and controls the cabin air system of the vehicle 100 accordingly. This means that depending on the received pollution data, the controller 104 adjusts operational parameters of the cabin air system, such as, for example, filtration parameters.

In contrast to the case where the pollution data stored in the hypermap is an estimate of the pollution generated by a vehicle (in the respective location and under the respective weather condition), the approach of FIG. 6 allows a more accurate determination of the tire-generated pollution of the vehicle (e.g. since individual parameters such as driving behaviour can be taken into account). By obtaining the friction coefficient from the database 105, the controller 104 does not need to determine the friction coefficient (between road and tire) itself. It should be noted that the database 105 may also store and provide road properties to the controller 104, such that the controller 104 can estimate the friction coefficient itself. It should further be noted that the estimation of the tire-generated pollution of the vehicle may for be used (e.g. by a further controller of the vehicle) to determine total emissions of the vehicle and possibly control them to reduce net emissions (and e.g. for fault detection and exclusion).

As explained above, pollution data may be acquired by vehicle sensors or measurement sensors and used for generating a hypermap as illustrated in FIG. 2 from which the pollution data may then be downloaded by vehicles (in particular cabin air system controllers).

The pollution data can include information about (e.g. the concentration of) the following pollutants: Pollen, PM10, PM2.5, PM1, NOx, CO, CO2, VOC (volatile organic compound). The availability of information about the different pollutants depends on the sensors installed in vehicles or the data that can be obtained from air quality measurement stations (or providers of air quality data). Information about all those pollutants is not required and the information can be used to determine an air quality level (e.g. by the controller 104). Information about multiple pollutants may be used in combination for better accuracy but information about single pollutants may also be used separately (or alone) to ensure some level of cabin air system control. For example, the PM1 and/or PM2.5 concentration can be used to decide whether to switch on a HEPA filtration system. Based on some threshold for one or both of these concentrations, depending on the use case, the controller 104 for example activates the HEPA filtration and once it judges the air quality to be good enough it switches off the filtration system to preserve its lifetime. For example, it uses a threshold of 10 ug/m3 for PM2.5 and PM1. So, if the PM 2.5 and/or PM1 concentration is above 10 ug/m3 the controller 104 activates the HEPA system.

For pollen, depending on the level of accuracy reached for pollen concentration and details of pollutants composition, the controller 104 can also switch on the HEPA filter to preserve passenger health when it detects high pollen concentration (possibly based on calculations). For example, the controller 104 activates a PM10 filter when the pollen concentration is above a predefined threshold.

The CO2 concentration must remain below a certain threshold to avoid any troubles at passenger side (headache, concentration issues ...). The controller 104 can for example use the following strategy: if CO2 >1000 ppm, the controller 104 controls the cabin air system to open a fresh air duct (e.g. flap) to increase fresh air flow. For example, the controller may include a smart management implemented on the flap to keep the CO2 concentration below 1000 and find the balance between thermal management and air quality. Others pollutants can also be considered to implement strategies, like NOx and/or VOC but concrete control actions may depend on the cabin air system integrated in the respective vehicle. As an example for considering multiple pollutants, the controller 104 may turn off fresh air intake if the concentration any of the above pollutants is above a predetermined CO2 threshold and the CO2 concentration is below another predetermined CO2 threshold. As another example, the controller 104 may turn on an activated carbon filter if the NOx concentration and/or the VOC concentration is above a predetermined threshold.

As described above, various vehicle sensors may be used to acquire pollution data. This is described in more detail in the following.

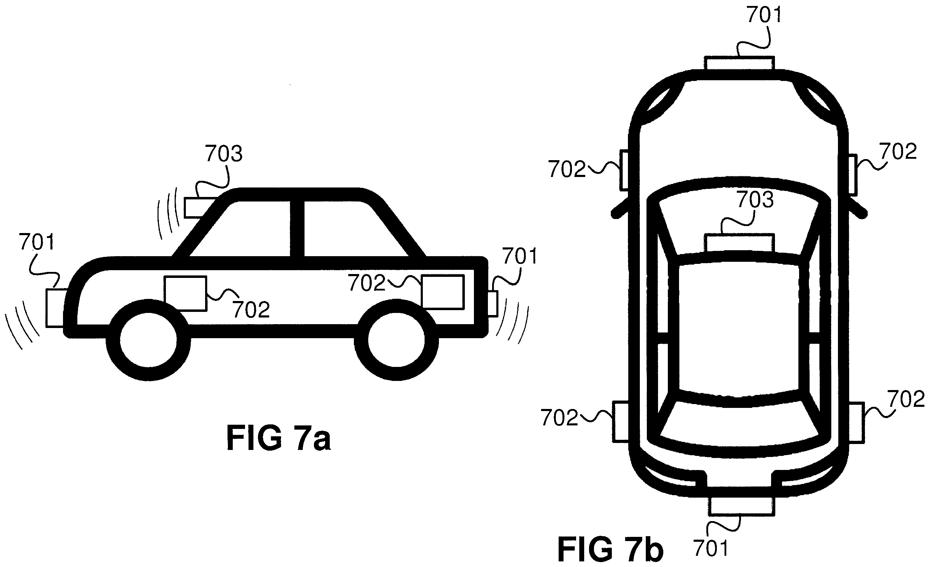

FIG. 7a and 7b illustrates the placement of vehicular sensors, in the form of one or more car sensors, that may be used to acquire pollution data on a vehicle. The car sensors may be configured to obtain sensor data surrounding the car and/or obtain sensor data from remotely located servers.

Laser sensors 701 may perform measurements on the front of the car or the rear.

Acoustic sensors 702 may measure acoustic changes on front or rear wheels.

A camera 703, e.g. positioned at the wind shield may gather information about the surface of a road where the car is driving.

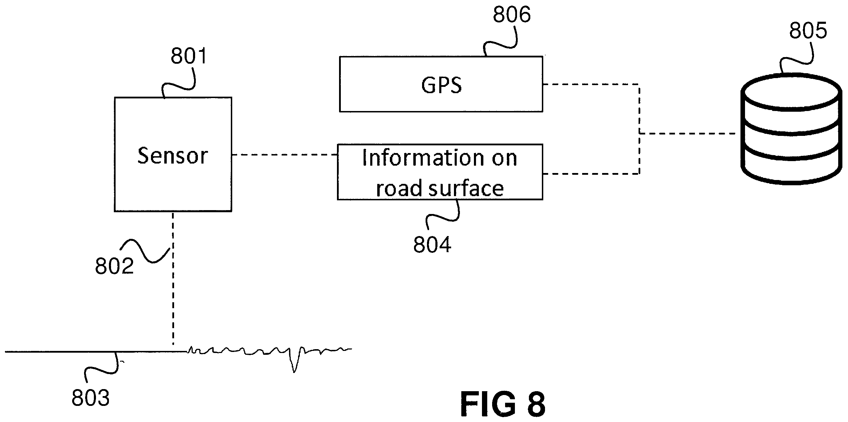

FIG. 8 illustrates the usage of a laser sensor 801 for determining road surface information 804.

In some embodiments, the laser sensor 801 used for road surface detection may be a Light Detection and Ranging (LiDAR) sensor. LiDAR sensors use laser beams 802 to measure the distance between the sensor 801 and the road surface 803. By rapidly emitting and detecting laser pulses, the LiDAR sensor creates a 3D map of the road surface. In the case of road surface detection, the laser (i.e. LiDAR) sensor 801 emits laser beams onto the road surface, and the time it takes for the light to bounce back to the sensor is measured. By calculating the time, it takes for the light to travel to the road surface and back, the laser sensor 801 can determine the distance between the sensor 801 and the road surface 803. By analyzing the data collected from the LiDAR sensor 801, it is possible to detect irregularities, such as potholes, cracks, or bumps, in the road surface.

As described above, the road surface information 804 (e.g. 3D map or information derived from it such as a level of roughness of the road) may be stored (as pollution information) in a database 805 per geographic location, i.e. the road surface information 804 may be combined or mapped to the geographical location. In some embodiments, the geographical location may be determined from GPS 806 for later request by, e.g., other vehicles.

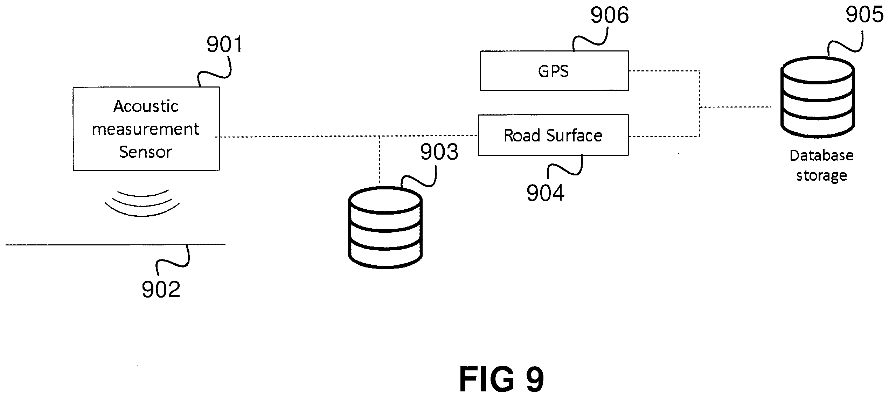

FIG. 9 illustrates the usage of an acoustic sensor 901 for determining road surface information 904.

In some embodiments, the acoustic sensor 901 for determining information, in the form of properties of a road surface 902, may be designed to measure the noise levels produced by vehicles as they travel on different road surfaces. The principle behind these sensors is based on the fact that different road surfaces produce different levels of noise when vehicles pass over them.

In some embodiments, the acoustic sensor 901 comprises a microphone that can be embedded in a car and connected to a data collection system. While the vehicle is driving, the microphone picks up the noise generated by the tires and sends the data to the data collection system. The data is then analyzed to determine the noise level produced by the vehicle on the road surface. The determination of the noise level may include comparison with a reference database 903 storing noise level data. The noise level data collected by the acoustic sensor can be used to evaluate the quality of road surface as the road surface information by comparing the noise level with a database of reference noise levels, and identify areas corresponding to the road surfaces.

As described above, the road surface information 904 (road quality) may be stored (as pollution information) in a database 905 per geographic location, i.e. the road surface information 904 may be combined or mapped to the geographical location. In some embodiments, the geographical location may be determined from GPS 906 for later request by, e.g., other vehicles.

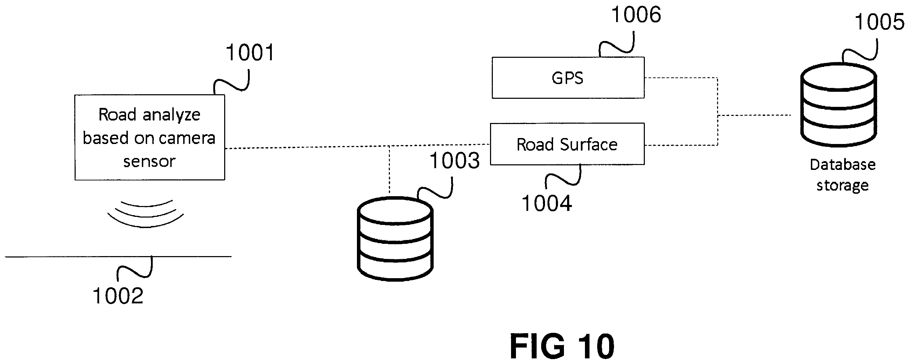

FIG. 10 illustrates the usage of a image sensor 1001 for determining road surface information 1004.

In some embodiments, the image sensor 1001 may be used to measure properties of a road surface 902. The image sensor 1001 may involves using a camera 1001 (or a plurality of cameras) to capture images or videos of the road surface 902, and then analyzing these images or videos to identify and classify different types of road surfaces, i.e. by comparing with reference data from a reference database 1003. In some embodiments, the analysis of images and comparison with reference data may be implemented using an artificial intelligence (Al) module. In some embodiments, the AI module may be trained using reference data in the form of historical data. The training may be based on supervised learning, unsupervised learning, and/or semi-supervised learning.

In some embodiments, the analysis and classification of images based on types of road surfaces may include the following steps:
- Image or video capture: the camera 1001 is used to capture images or videos of the road surface 1002.
- Preprocessing: The captured images or videos are preprocessed to enhance their quality and remove any unwanted noise or distortion.
- Feature extraction: Features of the road surface 1002, such as texture, colour, and shape, are extracted from the preprocessed images or videos.
- Classification: The extracted features are used to classify the road surface 1002 into different classes such as asphalt, concrete, gravel, or dirt.

The results of the classification may for example be used to make decisions about how to navigate the road. For example, a self-driving vehicle, e.g. a self-driving car might use this information to adjust its speed or steering angle. According to various embodiments, it is used as pollution data that allows estimating tire-generated pollution as described above.

There are different types of cameras that can be used for road surface detection, including monocular cameras, stereo cameras, and depth cameras. Each type has its own strengths and weaknesses, and the choice of camera depends on the specific application and requirements.

As described above, the road surface information 1004 (e.g. road class) may be stored (as pollution information) in a database 1005 per geographic location, i.e. the road surface information 1004 may be combined or mapped to the geographical location. In some embodiments, the geographical location may be determined from GPS 1006 for later request by, e.g., other vehicles.

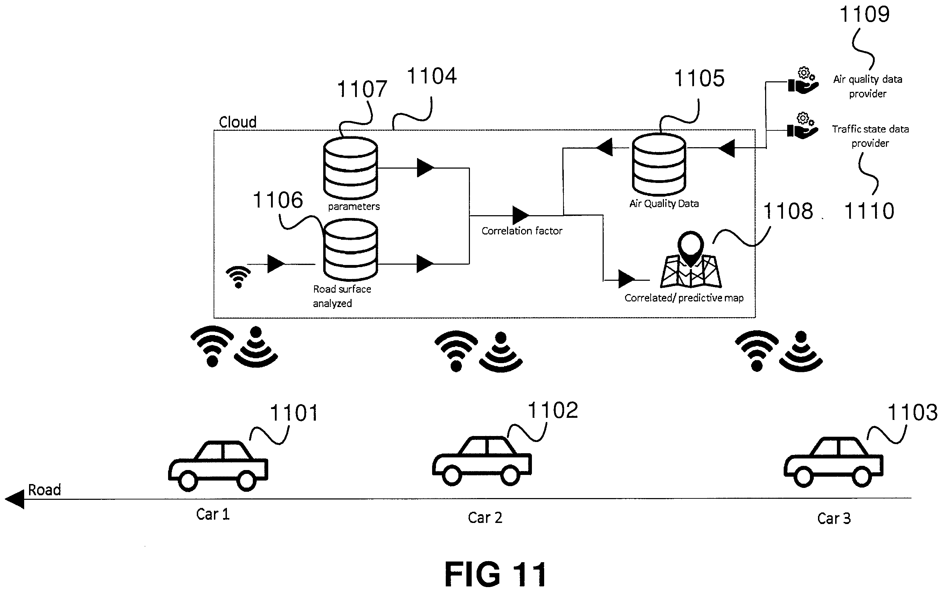

FIG. 11 illustrates the generation of a hypermap using sensor data of multiple vehicles 1101, 1102, 1103.

Each vehicle performs measurements using sensor measurements using one or more of the approaches of FIG. 8, 9 and 10 and communicates the respective acquired road surface information 804, 904, 1004 to a database system (e.g. cloud) 1104 (e.g. corresponding to the database 105) which stores all the road surface information in a road information storage 1105. The database system 1104 may include one or more servers.

Further, the database system 1104 (which may be implemented as one or more cloud servers) obtains information about air quality from one or more air quality data providers 1109 (e.g. operating measurement stations as described above) and one or more traffic state data providers 1110 (e.g. operating traffic monitoring stations) which it stores in an air quality data storage 1105. Using the information from the road surface information storage 1106 (which may be already analyzed to derive the road surface information) and the air quality data storage 1105 and possibly further parameters from a parameter storage 1107 the server generates (or updates) the hypermap 1108.

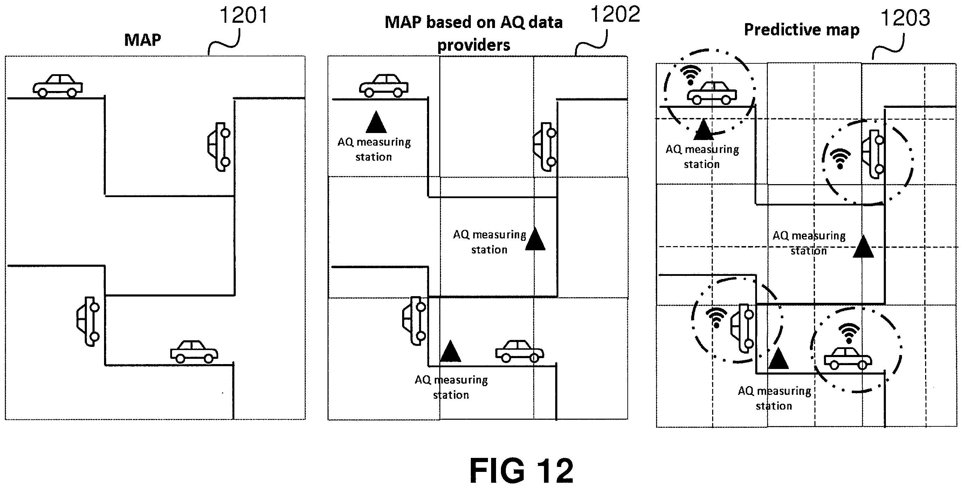

FIG. 12 shows illustrates the structure of a hypermap in terms of the geographical locations.

Starting from a classical map 1201 illustrating roads, a geographical area may be structured into geographical locations according to the location air quality (AQ) providers (possibly using interpolation and/or extrapolation). This structure 1202 may then further refined according to the geographical locations for which sensor data is received from vehicles (possibly using interpolation and/or extrapolation). This gives rise to a structure 1203 of geographical locations which may be used as a basis for the hypermap.

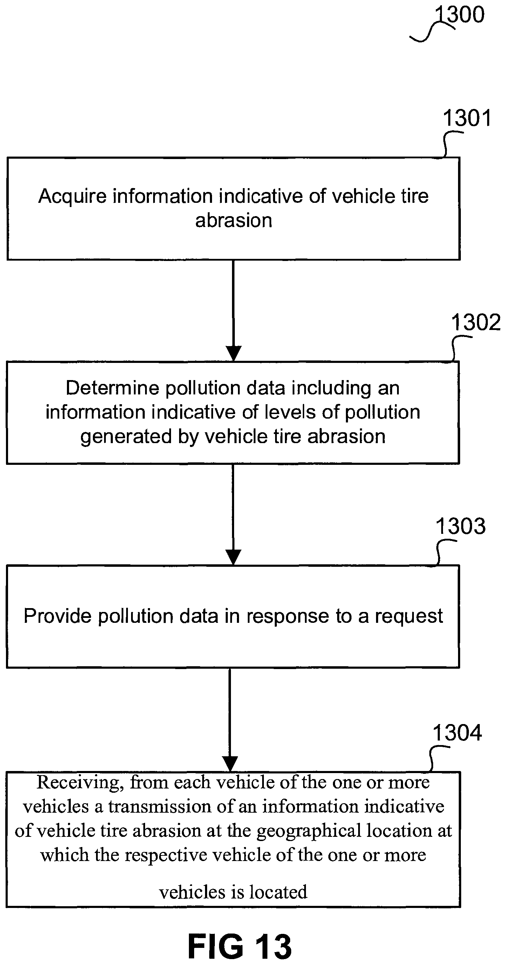

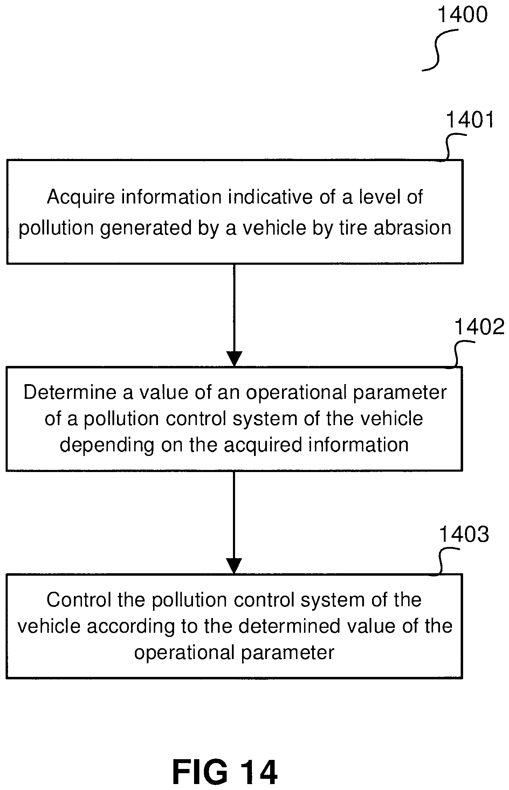

In summary, according to various embodiments, methods are provided as illustrated in FIG. 13 and FIG. 14.

FIG. 13 shows a flow diagram 1300 illustrating a method for providing information indicative of a level of pollution generated by vehicle tire abrasion to a vehicle.

In 1301, for each of at least some geographical locations of a plurality of geographical locations, information indicative of vehicle tire abrasion at the geographical location is acquired, wherein the (information indicative of) vehicle abrasion is derived from vehicle sensor data from one or more vehicles.

In 1302, for each of the plurality of geographical locations, pollution data including an information indicative of (e.g. about or based on) a level of pollution generated by vehicle tire abrasion at the geographical location derived from the acquired information indicative of vehicle tire abrasion is determined (and e.g. stored).

In 1303, in response to a request by a vehicle (i.e. a requestor or requesting vehicle, e.g. a requestor or requesting component of the vehicle) or from other sources for information indicative of the level of pollution generated by the vehicle by tire abrasion for a geographical location at which the vehicle is located, the information indicative of the level of pollution generated by vehicle tire abrasion determined (e.g. calculated and/or stored) for the geographical location at which the vehicle is located is provided.

In 1304, the method 1300 further comprises receiving, from each vehicle of the one or more vehicles a transmission of an information indicative of vehicle tire abrasion at the geographical location at which the respective vehicle of the one or more vehicles is located, and wherein the transmission may optionally comprise an indication of the geographical location at which the respective vehicle of the one or more vehicles is located.

FIG. 14 shows a flow diagram 1400 illustrating a method for controlling a pollution control system of a vehicle. In some embodiments, the pollution control system may be, or form part of, a navigation system of the vehicle taking into account air pollution.

In 1401, information indicative of a level of pollution generated by the vehicle by tire abrasion is acquired.

In 1402, a value of an operational parameter of a pollution control system of the vehicle depending on the acquired information is determined.

In 1403, the pollution control system of the vehicle is controlled according to the determined value of the operational parameter.

According to various embodiments, in other words, vehicle tire abrasion data is gathered based on sensor data from a plurality of vehicles at various locations and this is used to build a database of pollution generated by vehicle tire abrasion per geographical location which may then be requested by a vehicle, e.g. to control a pollution control system of the vehicle.

The methods described herein may be performed and the various processing or computation units and the devices and computing entities described herein may be implemented by one or more circuits. In an embodiment, a "circuit" may be understood as any kind of a logic implementing entity, which may be hardware, software, firmware, or any combination thereof. Thus, in an embodiment, a "circuit" may be a hard-wired logic circuit or a programmable logic circuit such as a programmable processor, e.g. a microprocessor. A "circuit" may also be software being implemented or executed by a processor, e.g. any kind of computer program, e.g. a computer program using a virtual machine code. Any other kind of implementation of the respective functions which are described herein may also be understood as a "circuit" in accordance with an alternative embodiment. A device (e.g. database system or vehicle, or vehicle component (e.g. vehicle controller) which performs one of the methods may for example include a communication interface (to receive and send the various data and information) a processing unit and a memory.

While the disclosure has been particularly shown and described with reference to specific embodiments, it should be understood by those skilled in the art that various changes in form and detail may be made therein without departing from the spirit and scope of the disclosure as defined by the appended claims. The scope of the disclsoure is thus indicated by the appended claims and all changes which come within the meaning and range of equivalency of the claims are therefore intended to be embraced.

## Claims

1. A method (1300) for providing information indicative of a level of pollution generated by vehicle tire abrasion to a vehicle (100), the method (1300) comprising:
acquiring (1301), for each of at least some geographical locations of a plurality of geographical locations, information indicative of vehicle tire abrasion at the geographical location, the vehicle abrasion derived from vehicle sensor data from one or more vehicles;
determining (1302), for each of the plurality of geographical locations, pollution data (505, 605) including an information indicative of a level of pollution generated by vehicle tire abrasion at the geographical location derived from the acquired information indicative of vehicle tire abrasion;
providing (1303), in response to a request (205) for information indicative of the level of pollution generated by the vehicle (100) by tire abrasion for a geographical location at which the vehicle is located, the information indicative of the level of pollution generated by vehicle tire abrasion determined for the geographical location at which the vehicle is located; and optionally
wherein the geographical location at which the vehicle is located is a road or a road segment.

2. The method (1300) of claim 1, further comprising receiving (1304), from each vehicle (100) of the one or more vehicles a transmission of an information indicative of vehicle tire abrasion at the geographical location at which the respective vehicle of the one or more vehicles is located, and wherein optionally, the transmission comprises an indication of the geographical location at which the respective vehicle of the one or more vehicles is located.

3. The method (1300) of claim 1 or 2, wherein the pollution data is stored in a database (105) external to the one or more vehicles.

4. The method (1300) of any one of claims 1 to 3, further comprising receiving the request (205) and providing the information indicative of the level of pollution generated by vehicle tire abrasion via radio communication.

5. The method (1300) of any one of claims 1 to 4, further comprising acquiring the information indicative of vehicle tire abrasion for a plurality of weather conditions and determining the pollution data including the information indicative of the level of pollution generated by vehicle tire abrasion per weather condition of the plurality of weather conditions.

6. The method (1300) of claim 5, wherein the request indicates at least one of the plurality of weather conditions and the method comprises providing the information about the level of pollution generated by the vehicle by tire abrasion at the geographical location at which the vehicle is located determined for the indicated weather condition.

7. The method of any one of claims 1 to 6, wherein the information indicative of the level of pollution generated by vehicle tire abrasion comprises an information indicative of a condition of the road or the road segment, and wherein optionally, the information indicative of the level of pollution generated by vehicle tire abrasion comprises an estimate of a friction coefficient between a vehicle's tire and the road or the road segment.

8. A database system (1104), the database system (1104) comprising at least one processor configured to:
acquire, for each of at least some geographical locations of a plurality of geographical locations, information indicative of vehicle tire abrasion at the geographical location, the vehicle abrasion derived from vehicle sensor data from one or more vehicles;
determine, for each of the plurality of geographical locations, pollution data including an information indicative of a level of pollution generated by vehicle tire abrasion at the geographical location derived from the acquired information indicative of vehicle tire abrasion, for example, by the method of any of the claims 1 to 10; and
provide, in response to a request for information indicative of the level of pollution generated by the vehicle by tire abrasion for a geographical location at which the vehicle is located, the information indicative of the level of pollution generated by vehicle tire abrasion determined for the geographical location at which the vehicle is located.

9. A controller (104), the controller (104) comprises at least one processor configured to
acquire information indicative of a level of pollution generated by a vehicle (100) by tire abrasion;
determine a value of an operational parameter of a pollution control system of the vehicle depending on the acquired information;
control the pollution control system of the vehicle according to a determined operational parameter; and optionally
wherein the information indicative of the level of pollution generated by the vehicle (100) by tire abrasion is at least partially derived from sensor data provided by a sensor (701, 702, 703) of the vehicle (100).

10. The controller (104) of claim 9, wherein the information indicative of the level of pollution generated by the vehicle by tire abrasion is acquired from a database (105) external to the vehicle, and optionally, wherein the information indicative of the level of pollution generated by the vehicle by tire abrasion from the database (105) is acquired via radio communication.

11. The controller (104) of claims 9 or 10, comprising acquiring the information indicative of the level of pollution generated by the vehicle by tire abrasion from the database by sending a request from the vehicle to the database indicating a location of the vehicle, a weather condition the vehicle is in, or both.

12. The controller (104) of any one of claims 9 to 11, wherein the information indicative of the level of pollution generated by the vehicle by tire abrasion comprises an information indicative of a condition of a road on which the vehicle (100) is located, wherein the information indicative of the level of pollution generated by the vehicle by tire abrasion comprises an estimate of a friction coefficient between the vehicle (100) tires and the road (802, 903, 1003) on which the vehicle (100) is located.

13. The controller (104) of any one of claims 9 to 12, wherein the pollution control system of the vehicle is a cabin air system and/or a navigation system of the vehicle taking into account air pollution.

14. The controller (104) of claim 13, wherein the at least one processor is further configured to estimate a concentration of pollutant particles caused by tire abrasion of the vehicle from the acquired information and determine the operational parameter of the cabin air system to reduce the concentration of pollutant particles caused by tire abrasion of the vehicle in a cabin of the vehicle if an estimated concentration of pollutant particles caused by tire abrasion of the vehicle is above a predetermined threshold.

15. A computer program element comprising program instructions, or a computer-readable medium comprising program instructions, which, when executed by one or more processors, cause the one or more processors to perform the method of any one of claims 1 to 7.
